# NEUE EUROPÄISCHE PATENTSCHRIFT

(11) **EP 1 529 470 B2**
(45) Veröffentlichungstag und Bekanntmachung des Hinweises auf die Entscheidung über den Einspruch: **29.12.2010**
(45) Hinweis auf die Patenterteilung: 08.02.2006
(21) Anmeldenummer: 03025226.6
(22) Anmeldetag: 05.11.2003
(51) Int. Cl.: A47J 31/54, H05B 3/14

(54) **Heizmodul mit Heizfläche und Durchlauferhitzer und Verfahren zu seiner Herstellung**
Heating modul with heating surface and continuous flow heater and production method thereof
Module de chauffage avec surface chauffante et chaudière instantanée et procédé pour sa fabrication

(43) Veröffentlichungstag der Anmeldung: 11.05.2005
(73) Patentinhaber: DBK David + Baader GmbH, 76870 Kandel (DE)
(72) Erfinder: von der Lühe, Friedrich, Discovery Bay, Lantau, Hongkong (CN); Muirhead, William, Chaiwan, Hong Kong (CN)
(74) Vertreter: Polte, Willi

(56) Entgegenhaltungen:
- EP-A- 0 573 691
- DE-A- 2 804 784
- DE-C- 4 240 840
- DE-G- 8 701 656
- DE-G- 9 415 252
- DE-U- 7 909 979
- DE-U- 7 912 211
- DE-U- 20 020 347

## Beschreibung

Die Erfindung betrifft ein Heizmodul gemäß dem Oberbegriff von Anspruch 1.

Heizmodule werden als Wärmequelle in Haushalts- oder Laborgeräten, wie Kaffeemaschinen, eingesetzt.

Bei einigen Geräten aus dem Stand der Technik, z. B. bei der DE 25 37 769 A1, wird eine Heizwendel verwendet, um mit der Heizfläche eine Abdeckplatte mit einer Warmhaltefunktion zu beheizen.

Nachteilig bei dem Gerät der DE 25 37 769 A1 ist jedoch, dass eine zusätzliche Leistungsregelung der Heizwendel durch ein Schutzthermostat nötig ist, um ein Überhitzen der Heizwendel zu verhindern. Dadurch erhöhen sich die Herstellkosten des Elektrogerätes, in dem das Heizmodul der DE 25 37 769 A1 eingesetzt wird, gleichzeitig steigt dessen Fehleranfälligkeit.

Auf eine Leistungsregelung kann verzichtet werden, wenn ein PTC-Element (Positive Temperature Coefficient) als Wärmequelle des Heizmoduls verwendet wird, wie beispielsweise bei den Heizmodulen der DE 28 04 818 C2 und der DE 29 48 591 C2: Durch seine Materialeigenschaften heizt das PTC-Element nur bis zum Erreichen einer vorbestimmten Grenztemperatur, oberhalb der Grenztemperatur schaltet das PTC-Element die Wärmeproduktion automatisch ab. Dieser Vorteil des PTC-Elements wird allerdings dadurch aufgewogen, dass seine Befestigung im Heizmodul konstruktiv aufwändig und nur unter einem hohen Fertigungsaufwand zu realisieren ist. So sind bei den Heizmodulen der DE 28 04 818 C2 und der DE 29 48 591 C2 zusätzliche Vorrichtungen in Form von Klammem und Federn vorgesehen, durch die das PTC-Heizelement gegen einen Heizkörper gedrückt wird, um einen guten Wärmeübergang zu erzielen.

Um dies zu vermeiden, wird in der EP 0 573 691 B1 ein anderer Weg beschritten: Ein PTC-Element wird in einem Strangpressprofil verpresst, das eine beheizbare Grundplatte als Heizfläche aufweist. Nachteilig bei dem Heizmodul der EP 0 573 691 B1 ist jedoch, dass aufgrund seiner eingeschränkten Funktionalität der Einsatzbereich in Hauhalts- und Laborgeräten gegenüber den Vorrichtungen der DE 28 04 818 C2 und der DE 29 48 591 C2 beschränkt bleibt.

In der DE 200 20 347 U1 ist ein Flüssigkeitsheizrohr beschrieben, bei dem ein PTC-Heizelement in einem Hohlraum eines Heizkörpers eingeklemmt ist. In einem ebenfalls im Heizkörper ausgeformten Durchflussloch sind Längsrippen für einen guten Wärmeübergang auf eine das Durchflussloch durchströmende Flüssigkeit angeordnet.

Der vorliegenden Erfindung liegt die Aufgabe zugrunde, ein Heizmodul zu schaffen, das einfach zu montieren ist, einen erweiterten Einsatzbereich aufweist sowie einfach und kostengünstig zu fertigen ist.

Diese Aufgabe wird erfindungsgemäß durch die Merkmale des Anspruchs 1 gelöst.

Diese Lösung ist einfach und führt dazu, dass das erfindungsgemäße Heizmodul mit einem geringen Fertigungs- und Montageaufwand mit geringen Kosten herstellbar ist und einfach zu montieren ist.

Gegenüber der EP 0 573 691 C2 ist das erfindungsgemäße Heizmodul insofern verbessert, als nunmehr der Durchlauferhitzer im Strangpressprofil in Form der Kanäle integriert ist.

Zwar sind auch aus der DE 29 48 591 C2 und der DE 28 04 818 C2 Heizmodule mit Durchlauferhitzern bekannt, doch ist bei diesen Heizmodulen weder das Heizelement verpresst, noch ist ein Strangpressprofil mit ausgeformten Kanälen für den Durchlauferhitzer vorgesehen.

Im Gegensatz zum Heizmodul der DE 25 37 769 A1 mit seiner eingelegten Heizwendel führt schließlich das Verpressen des Heizelements im Strangpressprofil zu einem erheblich verbesserten Wärmeübergang.

Unter einer direkten Durchströmung des Kanals ist im Folgenden eine Ausgestaltung zu verstehen, in welcher der Kanal selbst als Leitung dient; bei einer indirekten Durchströmung ist eine separate Leitung im Kanal aufgenommen, wobei dann die separate Leitung von dem Fluid durchströmt ist.

Erfindungsgemäß ist in dem Kanal wenigstens eine Rohrleitung eingesetzt. Dies hat den Vorteil, dass auf die Dichtigkeit und Druckfestigkeit des Kanals bei der Auslegung des Strangpressprofils nicht geachtet werden muss.

Um einen guten Wärmeübergang und einen guten Halt zwischen dem Strangpressprofil und der mindestens einen Rohrleitung zu gewährleisten, ist die mindestens eine Rohrleitung in dem Strangpressprofil verpresst.

Das erfindungsgemäße Heizmodul kann durch verschiedene, voneinander unabhängige, jeweils für sich vorteilhafte Ausgestaltungen weiterentwickelt werden. Auf diese Ausgestaltungen und die mit den Ausgestaltungen jeweils verbundenen Vorteile wird im Folgenden kurz eingegangen.

So kann in einer vorteilhaften Ausgestaltung das Strangpressprofil einen von dem wenigstens einen Kanal getrennten, weiteren Hohlraum aufweisen, und kann das Heizelement in dem weiteren Hohlraum verpresst sein. Dies hat den Vorteil, dass das Heizelement von dem Strangpressprofil durchgängig und lückenlos umschlossen ist, wodurch ein gleichmäßiges Verpressen und ein guter Wärmeübergang begünstigt wird.

Um die Fertigung des Profils zu vereinfachen, erstrecken sich die Hohlräume kanalartig in Längsrichtung durch das gesamte Strangpressprofil. Insbesondere können wenigstens zwei, vorzugsweise aber wenigstens drei derartige Hohlräume vorgesehen sein, wobei bei zwei dieser Hohlräume als jeweils ein Vorlauf- und ein Rücklaufkanal des Durchlauferhitzers dienen können.

Um ein gutes und gleichmäßiges Durchströmen des Fluids durch das Heizmodul zu gewährleisten, kann der Kanal in einer vorteilhaften Weiterbildung im Wesentlichen geradlinig ausgebildet sein. Ferner kann die Hauptströmungsrichtung des Fluids durch den Kanal im Wesentlichen geradlinig verlaufen. Durch ein gleichmäßiges Durchströmen wird ein gleichmäßiges Erwärmen des Fluids erreicht.

Für einen guten Wärmefluss zwischen dem Heizelement und dem zu beheizenden Medium, ist das Strangpressprofil in einer vorteilhaften Weiterbildung aus einem wärmeleitfähigen Material ausgeführt. Insbesondere kann das Strangpressprofil aus einem Metall, vorzugsweise Aluminium, hergestellt sein. Metalle und besonders Aluminium eignen sich darüber hinaus auch besonders gut für das Strangpressen, sie sind korrosions- und alterungsbeständig und weisen eine hohe Oberflächengüte auf.

Um das Verpressen des Strangpressprofils in der Aufnahme zu erleichtern, kann das Strangpressprofil wenigstens an einer Seite der Aufnahme als ein im Wesentlichen U-förmig verlaufende Presswulst ausgestaltet sein. Der Presswulst ist ein im Wesentlichen U-förmig hervorstehender und dadurch für ein Presswerkzeug zugänglicher, vorgeschwächter Materialbereich, der um ein vorbestimmtes Spaltmaß plastisch verformbar ist. Nach dem Einführen des Heizelementes in das Strangpressprofil kann der wenigstens eine Presswulst während des Montageprozesses des Heizmoduls zusammengedrückt werden, wodurch das Strangpressprofil in diesem vorgeschwächten Bereich plastisch verformt und die Aufnahme verkleinert wird. Hierdurch wird das Heizelement in der Aufnahme verpresst und vorgespannt, was einen guten Wärmeübergang zu dem Strangpressprofil gewährleistet und außerdem ein Verschieben des Heizelementes innerhalb des Strangpressprofils verhindert.

In einer weiteren vorteilhaften Ausgestaltung kann die Wärmeabgabefläche des Heizelements und die vom Strangpressprofil gebildete Heizfläche im Wesentlichen gleich groß sein. Dies hat den Vorteil, dass ein großflächiger, gradliniger Wärmefluss vom Heizelement zum Strangpressprofil erreicht und ein Wärmestau verhindert wird.

Für eine möglichst ein gleichmäßiges Strömungsverhalte des vorbeiströmenden Fluids in dem Kanal kann der Kanal mit einer im Wesentlichen kreisförmigen Querschnittfläche ausgeführt werden.

In einer vorteilhaften Weiterbildung können der mindestens eine Kanal, die mindestens eine Heizfläche und das Heizelement in dem erfindungsgemäßen Heizmodul in Richtung im Wesentlichen senkrecht zur Heizfläche übereinander angeordnet sein. Dies ist vorteilhaft, weil hierdurch ein guter Wärmefluss von dem Heizelement zu dem mindestens einen Kanal und der mindestens einen Heizfläche gewährleistet ist. Ferner kann das Strangpressprofil zwischen dem mindestens einen Kanal, dem Heizelement und der mindestens einen Heizfläche angeordnet sein, um auch so einen optimalen Wärmefluss vom Heizelement in beiden Richtungen zu ermöglichen.

Um Zu- und Ableitungen für das zu beheizende Medium an dem Heizmodul befestigen zu können, kann der mindestens eine Kanal, oder eine eingesetzte Leitung, am Ende mit Anschlussmitteln versehen sein. Dies können beispielsweise kurze Rohrleitungsenden sein, die in den Kanal wenigstens teilweise eingesteckt sind. Die Rohrteitungsenden können in den Kanal eingeklebt oder verpresst sein, so dass eine Anschlussleitung aufgesteckt werden kann. Die Anschlussleitung kann aus einem flexiblen Material, beispielsweise einem Kunststoff, hergestellt sein, und an ihrem Ende elastisch aufweitbar auf die Anschlussrohre aufgesteckt sein. Hierdurch kann auf eine zusätzliche Befestigung der Zu- bzw. Ableitung an den Rohrenden, z.B. durch Schlauchschellen, verzichtet werden, die aber auch möglich ist. Ferner sind auch Anschlussmittel möglich, die als Teil einer Steckverbindung ausgestaltet sind.

Ferner kann in einer vorteilhaften Weiterbildung die wenigstens eine Rohrleitung an wenigstens einem Ende aus dem Kanal herausragen und so ein Anschlussmittel für die Zu- und/oder Ableitung des Fluid bilden. Die Zu- und Ableitung kann auf den überstehenden Teil der Rohrleitung aufgesteckt und befestigt werden.

Ferner kann die mindestens eine Rohrleitung in dem Kanal eingeklebt sein. Hierdurch wird ein Verschieben der Rohrleitung innerhalb des Kanals verhindert. Um einen guten Wärmeübergang von dem Kanal zu der Rohrleitung zu gewährleisten, kann ein wärmeresistenter Klebstoff mit guten Wärmeleiteigenschaften verwendet werden.

Ferner kann die Rohrleitung in einer vorteilhaften Weiterbildung aus einem wärmeleitenden Material, vorzugsweise Aluminium, hergestellt sein. Hierdurch wird die Wärmeenergie innerhalb der Rohrleitung gut zu dem zu beheizenden Medium transportiert. Ferner kann die mindestens eine Rohrleitung auch aus korrosionsbeständigem Material hergestellt sein. Dies ist vorteilhaft, da die zu erhitzende Flüssigkeit durch die Rohrleitung hindurchfließt, was zu Ablagerungen führt und Korrosion verstärkt.

Ferner kann an dem mindestens einen Kanal in einer weiteren vorteilhaften Ausgestaltung wenigstens ein aus dem Kanal im wesentlichen quer zu dessen Längserstreckung verlaufender, im Wesentlichen U-förmiger Presswulst ausgestaltet sein, der sich vom Kanal nach außen erstreckt. Der Presswulst stellt einen vorgeschwächten und vorzugsweise vorgeformten Materialbereich des Strangpressprofils dar, in dem beim Verpressen der Rohrleitung die Verformung konzentriert ist. Dies hat den Vorteil, dass die Rohrleitung in dem Kanal gleichmäßig verpresst werden kann und dadurch ein guter Wärmeübergang ohne wärmeisolierend wirkende Luftspalte gewährleistet ist. Außerdem ist bietet der Presswulst eine Angriffsfläche für ein Presswerkzeug, z. B. einer Zange, gewährleistet, um die Verpressung zu bewirken.

In einer weiteren vorteilhaften Ausgestaltung können die Einlassseite und eine Auslassseite des Kanals und/oder der Rohrleitung auf derselben Stirnseite des Heizmoduls angeordnet sein. Dies hat den Vorteil, dass die Anschlussleitungen des Fluids nur an einer Stirnseite zu dem Heizmodul führen, so dass zum Anschluss des Kanals oder der Rohrleitung auch nur diese eine Stirnseite des Heizmoduls zugänglich sein muss. Ferner können auch die elektrischen Anschlussleitungen des Heizelementes auf derjenigen Stirnseite des Heizmoduls verlaufen, auf der auch die Einlassseite und die Auslassseite der Rohrleitung ist. Damit kann die Montage des Heizmoduls auf einfache Weise von lediglich einer Seite erfolgen.

Um die Wärmeenergie besonders gut an den Durchlauferhitzer und die Heizfläche leiten zu können, kann das Heizelement in einer weiteren vorteilhaften Ausgestaltung zwischen dem wenigstens einen Kanal und der wenigstens einen Heizfläche angeordnet sein.

In einer weiteren vorteilhaften Ausgestaltung kann das Heizelement zwei Elektrodenkörper umfassen, die mit dem mindestens einen dazwischen angeordneten PTC-Element einen Stapel bilden. Dies hat den Vorteil, dass durch die Elektrodenkörper eine gute Durchleitung des PTC-Elementes mit elektrischem Strom gewährleistet ist. Ferner können die Elektrodenkörper jeweils ein Kontaktelement aufweisen, durch das die Elektrodenkörper an eine Spannungsquelle anschließbar sind.

Um eine elektrische Isolierung des Heizelementes gegenüber dem Strangpressprofils zu erreichen, kann das Heizelement mindestens ein Isolierelement umfassen, das das mindestens eine PTC-Element und die zwei Elektrodenkörper umschließt. Weiterhin kann das Isolierelement aus einer Kunststofffolie, vorzugsweise einer Polyimidfolie, hergestellt sein. Die Kunststofffolie kann insbesondere eine beutelförmige Kaptonfolie sein, die das mindestens eine PTC-Element und die zwei Elektrodenkörper umschließt. Ferner kann das Heizelement gegenüber dem Strangpressprofil auch unter Zwischenlage eines Isolierelements elektrisch isoliert sein. Hierdurch wird das Heizelement gegenüber dem Strangpressprofil auf einfachste Weise isoliert.

Die Erfindung betrifft neben dem oben erläuterten Heizmodul und dessen Ausgestaltung auch ein Elektrogerät, insbesondere eine Kaffeemaschine oder ein Laborgerät, mit einem Flüssigkeitsspeicher, einer Warmhalteplatte und einer Leitung. Um den Montageaufwand und die Herstellungskosten eines solchen Elektrogerätes zu reduzieren, enthält das Elektrogerät ein Heizmodul einer der oben genannten Ausführungsformen, wobei die Heizfläche des Heizmoduls wärmeübertragend mit der Warmhalteplatte verbunden ist.

Um einen guten Wärmeübergang von dem Heizmodul zu der Warmhaltefläche zu gewährleisten, kann das Elektrogerät in einer vorteilhaften Weiterbildung ein Federelement umfassen, durch das eine Heizfläche des Heizmoduls gegen die Warmhalteplatte gedrückt wird.

Die Erfindung betrifft neben den oben erläuterten Vorrichtungen und ihren weiteren Ausgestaltungen auch ein Verfahren mit den Merkmalen des Anspruchs 22.

So kann das zu erwärmende Fluid direkt durch das Heizmodul hindurchgeleitet werden, wodurch ein guter Wärmeübergang von dem Strangpressprofil zu dem Fluid gewährleistet ist.

Die aus dem Kanal hervorstehende Rohrleitung bildet Anschlussmittel aus, an die Anschlussleitungen angeschlossen werden können.

Um das Fluid durch zwei Kanäle des Heizmoduls auf einfache Weise zu leiten, kann der Rohrkörper vor dem Einführen in zwei weitere Hohlräume in eine im Wesentlichen U-förmige Gestalte gebogen werden. Ferner können die beiden Schenkel des U-förmig gebogenen Rohrkörpers in voneinander getrennte weitere Hohlräume des Strangpressprofils vor dem Herstellen der Kanäle eingeführt werden.

In einer vorteilhaften Weiterbildung kann das Heizelement durch Bilden eines Stapels umfassend mindestens ein PTC-Element, zwei Elektrodenkörper und mindestens einem Isolierelement vor dem Einführen in das Strangpressprofil vormontiert werden. Dies hat den Vorteil, dass hierdurch die Montage des erfindungsgemäßen Heizmoduts vereinfacht wird.

Im Folgenden wird die Erfindung beispielhaft mit Bezug auf die beigefügten Zeichnungen erläutert. Die unterschiedlichen Merkmale können dabei unabhängig voneinander kombiniert werden, wie dies oben bei den einzelnen vorteilhaften Ausgestaltungen bereits dargelegt wurde.

Es zeigen:
- Fig. 1a/b/c: eine Ausführungsform eines erfindungsgemäßen Heizmoduls schematisch in drei Ansichten;
- Fig. 2: die Ausführungsform des Heizmoduls aus Fig. 1 schematisch in einer Perspektivansicht von unten;
- Fig. 3.: die Ausführungsform des Heizmoduls aus den Fig. 1 und 2 schematisch in einer Perspektivansicht von oben;
- Fig. 4.: eine Ausführungsform eines erfindungsgemäßen Haushaltsgerätes schematisch in einer Perspektivansicht, insbesondere einer Kaffeemaschine;
- Fig. 5: eine schematische Explosionsdarstellung des erfindungsgemäßen Heizmoduls aus Fig. 1 - 3.

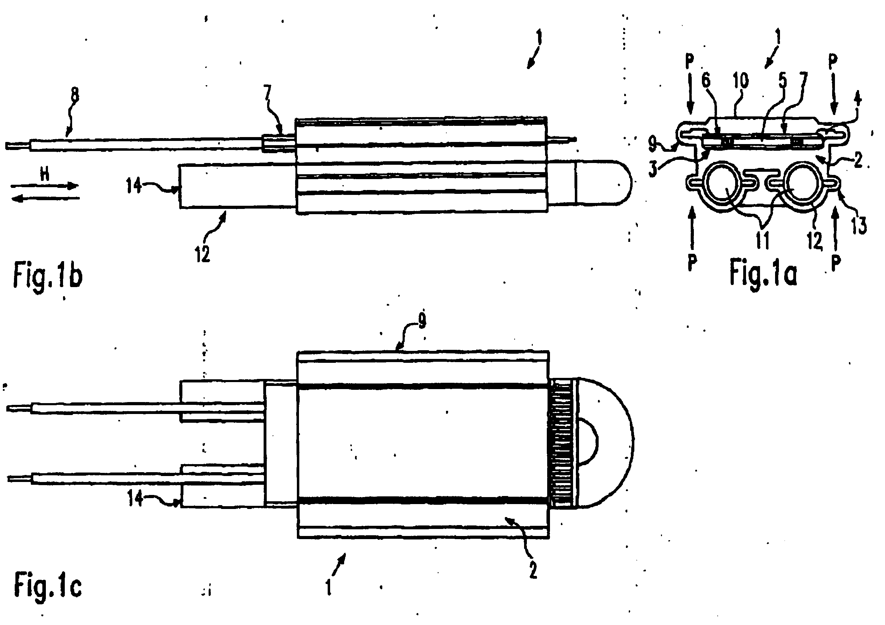

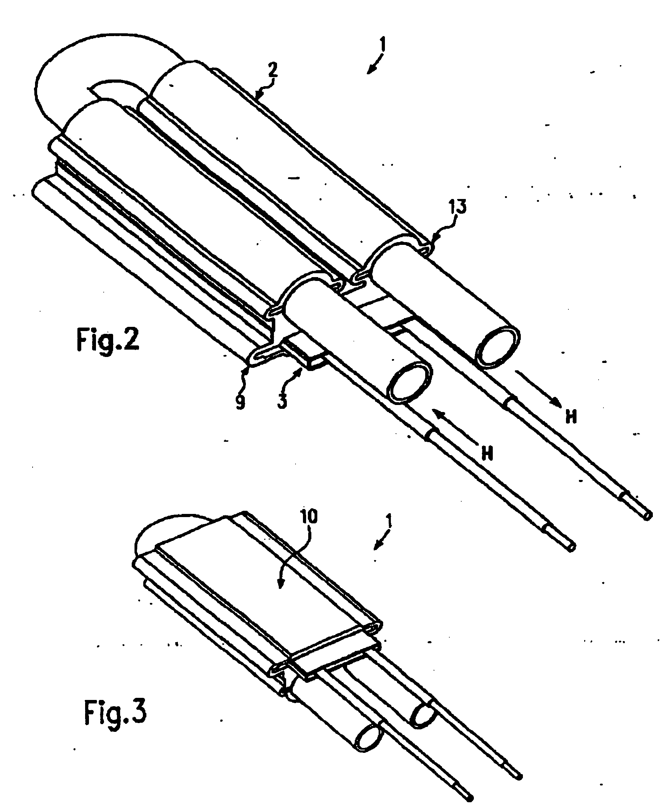

Die Fig. 1 bis 3 und 5 zeigen eine beispielhafte Ausführungsform des erfindungsgemäßen Heizmoduls 1 mit einem Strangpressprofil 2 und einem Heizelement 3. Das Strangpressprofil 2 bildet einen als Aufnahme 4 ausgeführten Hohlraum 4' aus, in dem das Heizelement 3 angeordnet ist.

Das Heizelement 3 besteht in der in Fig. 1 dargestellten Ausführungsform aus mindestens einem PTC-Element 5, zwei Elektrodenkörpem 6 und einem Isolierelement 7. Das plattenförmige PTC-Element 5 und die Elektrodenkörper 6 sind übereinander angeordnet. Um einen elektrischen Strom gleichmäßig durch das PTC-Element 5 zu leiten, weisen die Elektrodenkörper 6 eine Kontaktfläche auf, die im Wesentlichen genauso groß ist wie eine Wärmeabgabefläche W des PTC-Elementes 5. Bei einer Ausführung des Heizmoduls 1 mit mehreren PTC-Elementen 5 nebeneinander ist die Wärmeabgabefläche W der mehreren PTC-Elementen 5 zusammen im Wesentlichen gleichgroß mit der Kontaktfläche der Elektrodenkörper 6.

Der sandwichartige Aufbau des PTC-Elementes 5 und der Elektrodenkörper 6 wird durch das folienförrnige Isolierelement 7 umschlossen. Das Isolierelement 7 isoliert das Sandwich aus den zwei Elektrodenkörpem 6 und dem PTC-Element 5 elektrisch gegenüber dem Strangpressprofil 2.

Um eine gute Wärmeleitung von dem PTC-Element 5 bzw. den Elektrodenkörpern 6 zu dem Strangpressprofil 2 zu gewährleisten, ist das Isolierelement 7 aus einem wärmeleitenden Material hergestellt. Bei der beispielhaften Ausführungsform in Fig. 1 ist das Isolierelement 7 aus einer Polyimidfolie, insbesondere aus einer Kaptonfolie, hergestellt. Die Kaptonfolie hat den Vorteil, dass sie sehr wärmeleitfähig, aber dennoch elektrisch isolierend ist und außerdem druckfest ist. Durch die Druckfestigkeit des Isolierelementes kann eine auf das Heizelement 3 aufgebrachte Vorspannkraft uneingeschränkt an die Elektrodenkörper 6 und das PTC-Element 5 übertragen werden. Die Elektrodenkörper 6 sind jeweils über Kontaktelemente 6' und Kontaktleitungen 8 mit einer Spannungsquelle (nicht dargestellt) verbunden. Die Kontaktelemente 6' können Steckverbinder, z.B. einen genormten Stecker, umfassen, so dass ein einfaches Anbringen der Kontaktleitungen 8 an den Kontaktelementen 6' möglich ist. Eine unlösbare Verbindung der Kontaktleitungen 8 mit den Kontaktelementen, z.B. durch Löten, ist ebenfalls möglich.

Um einen guten Wärmeübergang zwischen dem Heizelement 3 und dem Strangpressprofil 2 zu erreichen, ist das Heizelement 3 im Strangpressprofil 2 verpresst. Seitlich des verpressten Strangpressprofils 2 sind Presswülste 9 in Form von an der Aufnahme 4 angrenzenden, im Wesentlichen U-förmigen Materialbereichen ausgebildet. Die Presswülste weisen einen inneren Luftspalt mit vorbestimmter Größe P₂ auf. Die Presswülste können um die Größe P₂ des Luftspaltes zusammengepresst werden. Bei einem Verpressen des Heizelementes 3 in dem Strangpressprofil 2 können zwei sich gegenüberliegende Presswerkzeuge (nicht dargestellt), z.B. eine Zange, die Presswülste 9 in einer Pressrichtung P zusammenpressen. Hierbei wird das Strangpressprofil 2 plastisch verformt und die Aufnahme 4 in Pressrichtung P verkleinert. Hierdurch wird das Heizelement 3 durch das Strangpressprofil 2 unter eine Vorspannung gesetzt, wodurch das paketartig aufgebaute Heizelement 3 aus Isolierelement 7, Elektrodenkörper 6 und PTC-Element 5 zusammengedrückt wird. Durch die Vorspannung werden mögliche Spalten oder Lücken zwischen PTC-Element 5, Elektrodenkörpem 6, Isolierelement 7 oder Strangpressprofil 2, die den Wärmeübergang behindern, dauerhaft weggedrückt.

Das Strangpressprofil 2 bildet weiterhin eine Heizfläche 10 aus, mit der eine zusätzliche Heizfunktion ausführbar ist. Beispielsweise kann an die Heizfläche 10 eine Platte (nicht dargestellt) aus einem wärmeleitfähigen Material angrenzen, die als eine Warmhalteplatte erwärmbar ist. Das in Fig. 1 beispielhaft dargestellte Strangpressprofil des erfindungsgemäßen Heizmoduls 1 besteht aus einem Aluminiumstrangpressprofil. Unterhalb der im Wesentlichen ebenen Heizfläche 10 ist das Strangpressprofil 2 verstärkt ausgeführt, um eine Verformung der Heizfläche 10 beim Verpressen des Heizelementes 3 zu verhindern. Durch die hohe Oberflächengüte des Aluminiumstrangpressprofils kann die Oberfläche der Heizfläche 10 unbearbeitet bleiben und dennoch einen guten Wärmeübergang aufgrund ihrer guten Oberfläche gewährleistet. Für einen guten Wärmefluss innerhalb des in Fig. 1-3 und 5 dargestellten Heizmoduls 1 sind die Heizfläche 10 und eine Wärmeabgabefläche W des Heizelementes 3 im Wesentlichen gleich groß.

Durch einen guten Wärmeübergang und großen Wärmeentzug kann eine hohe Heizleistung durch das mindestens eine PTC-Element 5 abgegeben werden, ohne dass das PTC-Element 5 sich selber stark erwärmt und dadurch seine Grenztemperatur erreicht bevor die gewünschte Heizleistung erbracht ist.

Gegenüberliegend von der Heizfläche 10 bildet das Strangpressprofil 2 in der in den Fig. 1 bis 3 und 5 beispielhaft dargestellten Ausführungsform zwei Kanäle 11 aus. Im Betrieb wird durch die im Wesentlichen geradlinigen Kanäle 11 ein flüssiges Medium, beispielsweise Wasser, geleitet, das durch das Heizmodul 1 erhitzt wird. Das Fluid strömt in einer Hauptströmungsrichtung H im Wesentlichen geradlinig durch die Kanäle 11 direkt oder auch hindurch. Um eine gleichmäßige Erwärmung und Strömung des Fluids innerhalb der Kanäle 11 zu gewährleisten, sind diese mit einem im Wesentlichen kreisförmigen Querschnitt ausgeführt. Der im Wesentlichen kreisförmige Querschnitt leistet einen geringen Strömungswiderstand und führt zu einer gleichmäßigen Strömung, bei der das Fluid im Wesentlichen gleichmäßig erwärmt wird.

In die Kanäle 11 ist zum indirekten Durchströmen des Fluids eine Rohrleitung 12 eingesetzt. Die Rohrleitung 12 ist außerhalb des Strangpressprofils 2 um etwa 180°, haamadelförmig gebogen. Hierdurch kann die eine Rohrleitung 12 durch beide Kanäle 11 hindurchführen.

Der Außendurchmesser der Rohrleitung 12 entspricht hierbei im Wesentlichen dem Innendurchmesser der Kanäle 11. Hierdurch wird vermieden, dass sich ein größerer Luftspalt zwischen der Rohrleitung 12 und den Kanälen 11 bildet, der eine Behinderung des Wärmeflusses darstellen würde. Um die Rohrleitung 12 in dem Kanal 11 zu befestigen und um einem schlechten Wärmefluss, z.B. durch kleine Spaltbildung, weiter entgegenzutreten, sind die Rohrleitungen 12 in der in den Fig. 1 bis 3 dargestellten Ausführungsform in dem Strangpressprofil 2 verpresst.

Um das Verpressen zu erleichtem, sind die Kanäle 11 jeweils seitlich mit U-förmig verlaufenden Presswülste 13 versehen. Die Presswülste 13 sind ähnlich ausgestaltet wie die oben beschriebenen Presswülste 9. Beim Verpressen der Rohrleitungen 12 werden die Presswülste 13 mit einem jeweils von oben und unten angreifenden Presswerkzeug (nicht dargestellt), beispielsweise einer Zange, in einer Pressrichtung P zusammengedrückt. Dadurch werden die kleineren Luftspalte, die den Wärmefluss zwischen dem Strangpressprofil 2 und der Rohrleitung 12 behindern, weggedrückt und die Rohrleitung 12 in dem Strangpressprofil 2 verdreh- und verschiebesicher befestigt.

Bei dem in den Fig. 1 bis 3 und 5 beispielhaft dargestellten Heizmodul 1 ist das Heizelementes 3 zwischen der Heizfläche 10 und den beiden n der Heizfläche 10 als auch den Kanälen 11 gewährleistet.

Die in den Fig. 1 bis 3 an einer Stimfläche des Strangpressprofils 2 herausschauenden Enden 14 der Rohrleitung 12 dienen als Anschlussmittel für die Zu- und Ableitungen (nicht dargestellt) des flüssigen Mediums, das durch das Heizmodul 1 erwärmt wird. Alternativ können die Enden 14 der Rohrleitung 12 auch als Teil einer Steckverbindung zum einfachen Aufstecken der Zu- und Ableitungen ausgeführt sein. Bei der in den Fig. 1 bis 3 beispielhaft dargestellten Ausführungsform werden die Zu- und Ableitungen auf die Rohrleitungsenden 14 aufgeschoben. Die Zu- und Ableitungen werden mit einem Befestigungsmittel, z.B. einer Rohrschelle, an den Rohrleitungsenden 14 befestigt. Alternativ können die Zu- und Ableitungen, die z.B. aus einem elastischen schlauchförmigen Material sind, durch eine Aufweitung durch die Rohrleitungsenden 14 durch eine radial wirkende Rückziehkraft halten.

Das in den Fig. 1 bis 3 und 5 beispielhaft dargestellte erfindungsgemäße Heizmodul ist mit zwei Kanälen 11 ausgeführt. Alternativ kann das erfindungsgemäße Heizmodul auch mehr als zwei Kanäle 11 aufweisen. Das zu erhitzende Medium kann außerdem sowohl parallel als auch in Reihe durch diese mehreren Kanäle direkt oder auch indirekt hindurchströmen.

Mit dem in den Fig. 1 bis 3 und 5 beispielhaft dargestellten efindungsgemäßen Heizmodul 1 kann das durch die Kanäle 11 hindurchgeleitete Fluid mit einer Heizleistung von in etwa 600 W aufgeheizt werden.

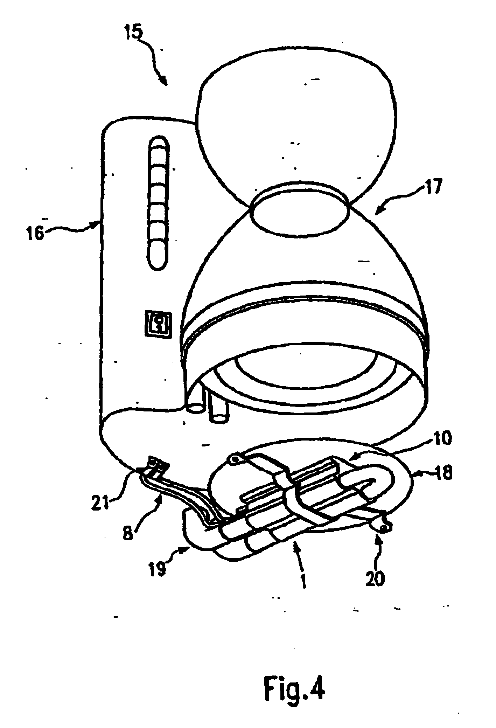

Fig. 4 zeigt eine beispielhafte Ausführungsform eines erfindungsgemäßen Elektrogerätes, das ein Elektrogerät, insbesondere eine Kaffeemaschine 15 darstellt. Die Kaffeemaschine 15 hat eine Flüssigkeitsversorgung 16, einen Flüssigkeitsspeicher 17, eine Warmhaltefläche 18, eine Leitung 19 und ein Heizmodul 1. Im Betrieb strömt eine kalte Flüssigkeit, z. B. Wasser, aus der Flüssigkeitsversorgung 16 durch die Leitung 19 zu dem Heizmodul 1. Während die Flüssigkeit das Heizmodul 1 durchströmt, wird sie erwärmt. Die von dem Heizmodul 1 erwärmte Flüssigkeit strömt von dem Heizmodul 1 durch die Leitung 19 zu dem Warmflüssigkeitsspeicher 17. Unter dem Warmtlüssigkeitsspeicher 17 ist eine Warmhalteplatte 18 angeordnet, durch die die Flüssigkeit in dem Warmflüssigkeitsspeicher 17 warm gehalten wird. Unter der Warmhalteplatte 18 ist das Heizmodul 1 mit einem Federelement 20 angebracht. Eine Heizfläche 10 des Heizmoduls 1 wird gegen die Warmhalteplatte 18 gedrückt und gibt Wärmeenergie an sie ab. Das Heizmodul 1 wird über Kontaktleitungen 8 mit einer Spannungsquelle verbunden. Die Kontaktleitungen 8 können zum einfachen Anschluss an die Spannungsquelle mit Anschlußelementen 21, z.B. einem genormten Stecker, ausgeführt sein. Anstelle der in Fig. 4 beispielhaft dargestellten Flüssigkeitsversorgung 16 kann die Leitung 19 der Kaffeemaschine 15 auch direkt an eine Flüssigkeitsquelle (nicht dargestellt), z.B. eine Wasserversorgungsleitung, angeschlossen werden.

Bei der in Fig. 4 beispielhaft dargestellten erfindungsgemäßen Kaffeemaschine 15 übernimmt das Heizmodul 1 sowohl die Funktion des Erhitzens einer durchlaufenden Flüssigkeit als auch die Funktion der Wärmeenergieversorgung einer Warmhalteplatte 18. Dabei ist die von dem Heizmodul 1 aufzubringende Wärmeleistung sehr unterschiedlich, bei dem Erwärmen der Flüssigkeit etwa 600 W und beim Heizen der Warmhalteplatte 18 in etwa 60 W. Durch den Einsatz des erfindungsgemäßen Heizmoduls 1 aus den Fig. 1 bis 3 und 5 kann bei der erfindungsgemäßen Kaffeemaschine 15 vorteilhafterweise auf eine Temperaturregelung verzichtet werden.

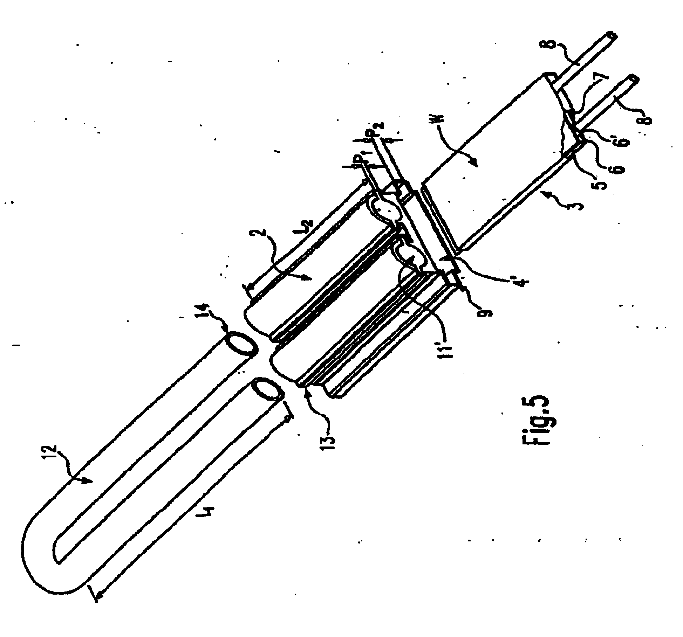

Fig. 5 zeigt eine Explosionsdarstellung einer Ausführungsform des erfindungsgemäßen Heizmoduls 1. Anhand von Fig. 5 wird im Folgenden ein Herstellungsverfahren für das erfindungsgemäße Heizmodul 1 beschrieben.

Das in Fig. 5 beispielhaft dargestellte Strangpressprofil 2 ist mit drei Hohlräumen 4', 11' gefertigt. In dem Hohlraum 4' wird das Heizelement 3 eingeführt. Das Heizelement 3 ist vor dem Einführen in das Strangpressprofil 2 durch Bilden eines Stapels umfassend das wenigstens eine PTC-Element 5, zwei Elektrodenkörper 6 und einem Isolierelement 7 vormontiert worden. Nach dem Einführen wird das Heizelement 3 in dem Hohlraum 4' verpresst. Hierzu drückt ein geeignete Werkzeug, z. B. eine Zange, das Strangpressprofil 2 im vorgeschwächten Bereich eines Presswulstes 9 in einer Pressrichtung P zusammen. Der Luftspalt P₂ des Presswulstes 9 wird dadurch verringert. Die plastische Verformung des vorgeschwächten Strangpressprofils 2 im Bereich der Presswülste 9 wird solange fortgeführt, bis das Heizelement 3 in dem Hohlraum 4' verpresst ist.

Eine Rohrleitung 12 ist vor der Montage des erfindungsgemäßen Heizmoduls in eine U-förmige Form gebogen worden. Die beiden Schenkel der U-förmigen Rohrleitung 12 werden in die beiden weiteren Hohlräume 11' des Strangpressprofils 2 eingeführt. Dabei ist die Länge L₁ des Rohrleitung 12 größer als die Länge L₂ des Strangpressprofils 2, wodurch die Rohrleitungsenden 14 der Rohrleitung 12 nach dem Einführen aus dem Strangpressprofil 2 hervorstehen und dadurch Anschlussmittel für die Zu- und Ableitung des Fluids bilden. Nach dem Einführen der Rohrleitung 12 in die weiteren Hohlräume 11' wird die Rohrleitung 12 im Strangpressprofils 2 verpresst. Hierfür werden die oberen Presswülste 13 mit einem geeigneten Werkzeug, z. B. einer Zange, in einer Pressrichtung P beidseitig zusammengedrückt. Hierbei verringert sich der Luftspalt P₁ der Presswülste 13. Die plastische Verformung des vorgeschwächten Bereichs der Presswülste 13 wird solange fortgeführt, bis der Rohrkörper 12 in dem Strangpressprofil 2 verpresst ist. Durch dieses Querschnittsverformen der weiteren Hohlräume 11' ist ein Kanal 11, von einem Fluid durchströmbar ist, hergestellt worden.

Das Heizelement 3 und die Rohrleitungen 12 können auch in einen Arbeitsschritt in dem Strangpressprofil verpresst werden. Dabei werden die verschiedenen Presswülste 9, 13 in der Pressrichtung P zusammengedrückt.

## Patentansprüche

1. Heizmodul (1) zum Einbau in ein Elektrogerät, beispielsweise in ein Haushaltsgerät wie eine Kaffeemaschine oder in ein Laborgerät, mit wenigstens einer aus einem Profil (2) geformten Heizfläche (10) und mit einem Heizelement (3), das wenigstens ein PTC-Element (5) umfasst und im Profil (2) verpresst ist, sowie mit einem im Heizmodul (1) integrierten Durchlauferhitzer, der wenigstens einen im Profil (2) ausgeformten und von einem Fluid durchströmbar ausgestalteten Kanal (11) aufweist, **dadurch gekennzeichnet, dass** das Profil (2) als Strangpressprofil (2) ausgebildet ist und dass eine von dem Fluid durchströmbare Rohrleitung (12) in dem Kanal (11) luftspaltlos verpresst ist, wobei der Kanal (11) um die Rohrleitung (12) zusammengedrückt ist.

2. Heizmodul (1) nach Anspruch 1, **dadurch gekennzeichnet, dass** das Strangpressprofil (2) einen von dem wenigstens einen Kanal (11) getrennten, weiteren Hohlraum (4') aufweist und dass das Heizelement (3) in dem weiteren Hohlraum (4') verpresst ist.

3. Heizmodul (1) nach Anspruch 1 oder 2, **dadurch gekennzeichnet, dass** der Kanal (11) im Wesentlichen geradlinig ausgebildet ist.

4. Heizmodul (1) nach einem der oben genannten Ansprüche, **dadurch gekennzeichnet, dass** die Hauptströmungsrichtung (H) des Fluids durch den Kanal (11) im Wesentlichen geradlinig verläuft.

5. Heizmodul (1) nach einem der oben genannten Ansprüche, **dadurch gekennzeichnet, dass** das Strangpressprofil (2) aus einem Metall, vorzugsweise Aluminium, hergestellt ist.

6. Heizmodul (1) nach einem der oben genannten Ansprüche, **dadurch gekennzeichnet, dass** das Strangpressprofil (2) wenigstens an einer Seite der Aufnahme (4) als ein im Wesentlichen U-förmig verlaufender Presswulst (13) ausgestaltet ist.

7. Heizmodul (1) nach einem der oben genannten Ansprüche, **dadurch gekennzeichnet, dass** die Wärmeabgabefläche (W) des Heizelements (3) und die vom Strangpressprofil (2) gebildete Heizfläche (10) im Wesentlichen gleich groß sind.

8. Heizmodul (1) nach einem der oben genannten Ansprüche, **dadurch gekennzeichnet, dass** der wenigstens eine Kanal (11), die wenigstens eine Heizfläche (10) und das Heizelement (3) in Richtung im Wesentlichen senkrecht zur Heizfläche (10) übereinander angeordnet sind.

9. Heizmodul (1) nach einem der oben genannten Ansprüche, **dadurch gekennzeichnet, dass** die Rohrleitung (12) im Wesentlichen länger als der Kanal (11) ausgeführt ist.

10. Heizmodul (1) nach einem der oben genannten Ansprüche, **dadurch gekennzeichnet, dass** die Rohrleitung (12) aus einem wärmeleitfähigen. Material, vorzugsweise aus Aluminium, hergestellt ist.

11. Heizmodul (1) nach einem der oben genannten Ansprüche, **dadurch gekennzeichnet, dass** die Rohrleitung (12) aus einem korrosionsbeständigen Material hergestellt ist.

12. Heizmodul (1) nach einem der oben genannten Ansprüche, **dadurch gekennzeichnet, dass** der Kanal (11) eine Einlassseite und eine Auslassseite aufweißt und dass die Einlassseite und die Auslassseite auf der selben Seite des Heizmoduls (1) angeordnet sind.

13. Heizmodul (1) nach einem der oben genannten Ansprüche, **dadurch gekennzeichnet, dass** das Heizelement (3) zwischen dem wenigstens einen Kanal (11) und der wenigstens einen Heizfläche (10) angeordnet ist.

14. Heizmodul (1) nach einem der oben genannten Ansprüche, **dadurch gekennzeichnet, dass** an dem mindestens einen Kanal (11) wenigstens ein im Wesentlichen U-förmig verlaufender Presswulst (13) ausgestaltet ist.

15. Heizmodul (1) nach einem der oben genannten Ansprüche, **dadurch gekennzeichnet, dass** das Heizelement (3) zwei Elektrodenkörper (6) umfasst, die mit dem mindestens einen dazwischen angeordneten PTC-Element (5) einen Stapel bilden.

16. Heizmodul (1) nach Anspruch 15, **dadurch gekennzeichnet, dass** die Elektrodenkörper (6) jeweils ein Kontaktelement (6') aufweisen, durch das die Elektrodenkörper (6) an einer Spannungsquelle anschließbar sind.

17. Heizmodul (1) nach einem der oben genannten Ansprüche, **dadurch gekennzeichnet, dass** das Heizelement (3) mindestens ein Isolierelement (7) umfasst, das den Stapel aus dem mindestens einen PTC-Element (5) und den zwei Elektrodenkörpern (6) elektrisch isolierend umschließt.

18. Heizmodul (1) nach einem der oben genannten Ansprüche, **dadurch gekennzeichnet, dass** das Heizelement (3) gegenüber dem Strangpressprofil (2) unter Zwischenlage eines Isolierelements (7) elektrisch isoliert ist.

19. Heizmodul (1) nach Anspruch 17 oder 18, **dadurch gekennzeichnet, dass** das Isolierelement (7) aus einer wärmeleitenden Kunststofffolie, vorzugsweise einer Polyimidfolie, hergestellt ist.

20. Elektrogerät, insbesondere eine Kaffeemaschine (15) oder ein Laborgerät, mit einem Flüssigkeitsspeicher (17), einer Warmhalteplatte (18) und einer Leitung (19), **dadurch gekennzeichnet, dass** das Elektrogerät ein Heizmodul (1) nach einem der Ansprüche 1 bis 19 enthält, wobei die Heizfläche (10) des Heizmoduls (1) wärmeübertragend mit der Warmhalteplatte (18) verbunden ist.

21. Elektrogerät nach Anspruch 20, **dadurch gekennzeichnet, dass** das Elektrogerät ein Federelement (20) umfasst, durch das das Heizmodul (1) gegen die Warmhalteplatte (18) gedrückt ist.

22. Verfahren zum Herstellen eines Heizmoduls (1), mit dem durchlaufende Flüssigkeiten erwärmbar sind und gleichzeitig eine integrierte Heizfläche (10) beheizbar ist, umfassend folgenden Verfahrensschritt:
- Bereitstellen eines Strangpressprofils (2) mit wenigstens zwei voneinander getrennten Hohlräumen (4', 11') und einer Heizfläche (10),
- Einführen eines ein PTC-Element umfassenden Heizelementes (3) in den einen Hohlraum (4') des Strangpressprofils (2),
- Verpressen des Heizelementes (3) in dem Hohlraum (4') durch plastisches Verformen des Strangpressprofils (2),
- Einführen wenigstens einer von einem Fluid durchströmbaren Rohrleitung (12) in den wenigstens einen weiteren Hohlraum (11),
- Herstellen eines Kanals (11) durch plastisches Querschnittsverformen des weiteren Hohlraumes (11) um die Rohrleitung (12).

23. Verfahren nach Anspruch 22, **gekennzeichnet durch** folgenden Verfahrensschritt:
- Biegen der Rohrleitung (12) in eine im Wesentlichen U-förmige Gestalt vor dem Einführen in zwei weitere Hohlräume.

24. Verfahren nach Anspruch 23, **gekennzeichnet durch** folgenden Verfahrensschritt:
- Einführen der beiden Schenkel des U-förmig gebogenen Rohrleitung (12) in voneinander getrennte weitere Hohlräume des Strangpressprofils (2) vor dem Herstellen der Kanäle (11).

25. Verfahren nach Anspruch 22 bis 24, **gekennzeichnet durch** folgenden Verfahrensschritt:
- Vormontieren des Heizelementes (3) **durch** Bilden eines Stapels umfassend mindestens ein PTC-Element (5), zwei Elektrodenkörpern (6) und mindestens einem Isolierelement (7) vor dem Einführen in das Strangpressprofil (2).

## Claims

1. A heating unit (1) for fitting in an electric appliance, e.g. a domestic appliance such as a coffee machine or a laboratory appliance, having at least one heating surface (10) formed from a profile (2) and having a heating element (3) which comprises at least one PTC element (5) and is pressed into the profile (2), and having a flow heater which is incorporated in the heating unit (1) and which has at least one channel (11) formed in the profile (2) and configured for a fluid to flow through, **characterised in that** the profile (2) is formed as an extruded profile (2) and **in that** a conduit (12) through which a fluid may flow is pressed into the channel (11) without an air gap, the channel (11) being compressed around the conduit (12).

2. The heating unit (1) according to Claim 1, **characterised in that** the extruded profile (2) has a further cavity (4') separate from the at least one channel (11), and **in that** the heating element (3) is pressed into the-further cavity (4').

3. The heating unit (1) according to Claim 1 or 2, **characterised in that** the channel (11) is substantially rectilinear in form.

4. The heating unit (1) according to one of the preceding claims, **characterised in that** the main flow direction (H) of the fluid through the channel (11) is substantially rectilinear.

5. The heating unit (1) according to one of the preceding claims, **characterised in that** the extruded profile (2) is manufactured from a metal, preferably aluminium.

6. The heating unit (1) according to one of the preceding claims, **characterised in that** the extruded profile (2) is formed at least on one side of the seat (4) as a substantially U-shaped pressed bead (13).

7. The heating unit (1) according to one of the preceding claims, **characterised in that** the heat transfer surface (W) of the heating element (3) and the heating surface (10) formed by the extruded profile (2) are substantially the same size.

8. The heating unit (1) according to one of the preceding claims, **characterised in that** the at least one channel (11), the at least one heating surface (10) and the heating element (3) are disposed over one another in the direction substantially perpendicular to the heating surface (10).

9. The heating unit (1) according to one of the preceding claims, **characterised in that** the conduit (12) is formed substantially longer than the channel (11).

10. The heating unit (1) according to one of the preceding claims, **characterised in that** the conduit (12) is manufactured from a heat-conducting material, preferably aluminium.

11. The heating unit (1) according to one of the preceding claims, **characterised in that** the conduit (12) is manufactured from a corrosion-resistant material.

12. The heating unit (1) according to one of the preceding claims, **characterised in that** the channel (11) has an inlet side and an outlet side and **in that** the inlet side and the outlet side are disposed on the same side of the heating unit (1).

13. The heating unit (1) according to one of the preceding claims, **characterised in that** the heating element (3) is disposed between the at least one channel (11) and the at least one heating surface (10).

14. The heating unit (1) according to one of the preceding claims, **characterised in that** at least one substantially U-shaped pressed bead (13) is formed on the at least one channel (11).

15. The heating unit according to one of the preceding claims, **characterised in that** the heating element (3) comprises two electrode bodies (6), which form a stack with the at least one interposed PTC element (5).

16. The heating unit (1) according to Claim 15, **characterised in that** the electrode bodies (6) each have a contact element (6'), by means of which the electrode bodies (6) can be connected to a voltage source.

17. The heating unit (1) according to one of the preceding claims, **characterised in that** the heating element (3) has at least one insulating element (7), which encompasses the stack composed of the at least one PTC element (5) and the two electrode bodies (6) so as to provide them with electrical insulation.

18. The heating unit (1) according to one of the preceding claims, **characterised in that** the heating element (3) is electrically insulated from the extruded profile (2) by the interposition of an insulating element (7).

19. The heating unit (1) according to Claim 17 or 18, **characterised in that** the insulating element (7) is manufactured from a heat-conducting plastics foil, preferably a polyimide foil.

20. An electrical appliance, in particular a coffee machine (15) or a laboratory appliance, having a liquid reservoir (17), a plate (18) for keeping hot and a line (19), **characterised in that** the electrical appliance contains a heating unit (1) according to one of Claims 1 to 19, the heating surface (10) of the heating unit (1) being connected so as to transfer heat to the plate (18) for keeping hot.

21. The electrical appliance according to Claim 20, **characterised in that** the electrical appliance comprises a spring element (20), which presses the heating unit (1) against the plate (18) for keeping hot.

22. A method of manufacturing a heating unit (1), with which passing liquids may be heated and simultaneously an integral heating surface (10) may be heated, comprising the following steps:
- Providing an extruded profile (2) with at least two separate cavities (4' 11') and a heating surface (10),
- inserting a heating element (3) comprising a PTC element into the one cavity (4') of the extruded profile (2),
- Pressing the heating element (3) into the cavity (4') by plastic deformation of the extruded profile (2),
- Inserting at least one conduit (12) through which a fluid may pass into the at least one further cavity (11),
- Manufacturing a channel (11) by plastic cross-sectional deformation of the further cavity (11) around the conduit (12).

23. The method according to Claim 22, **characterised by** the following step in the process:
- Bending the conduit (12) into a substantially U-shaped configuration before inserting into two further cavities.

24. The method according to Claim 23, **characterised by** the following step in the process:
- Inserting the two arms of the U-shaped conduit (12) into mutually separate further cavities of the extruded profile (2) before manufacturing the channels (11).

25. The method according to Claims 22 to 24, **characterised by** the following step in the process:
- Pre-assembling the heating element (3) by forming a stack comprising at least one PTC element (5), two electrode bodies (6) and at least one insulating element (7) before insertion into the extruded profile (2).

## Revendications

1. Module de chauffage (1) à intégrer dans un appareil électrique, par exemple dans un appareil électroménager tel qu'une cafetière électrique ou un appareil de laboratoire, comprenant au moins une surface de chauffe (10) formée par un profilé (2) et un élément chauffant (3), qui comprend au moins un élément CTP (5) et qui est maintenu par compression dans le profilé (2), ainsi qu'un chauffe-eau instantané intégré dans le module de chauffage (1), qui présente au moins un canal (11) formé dans le profilé (2) et réalisé de manière à pouvoir être traversé par un fluide, **caractérisé en ce que** le profilé (2) est réalisé sous forme de profilé extrudé (2) et **en ce qu'**une conduite (12) pouvant être traversée par le fluide est maintenue par compression dans le canal (11) sans espace d'air, le canal (11) étant pressé autour de la conduite (12).

2. Module de chauffage (1) selon la revendication 1, **caractérisé en ce que** le profilé extrudé (2) présente un autre espace creux (4') séparé du au moins un canal (11) et **en ce que** l'élément chauffant (3) est maintenu par compression dans l'autre espace creux (4').

3. Module de chauffage (1) selon la revendication 1 ou 2, **caractérisé en ce que** le canal (11) est essentiellement rectiligne.

4. Module de chauffage (1) selon l'une quelconque des revendications précédentes, **caractérisé en ce que** le sens d'écoulement principal (H) du fluide à travers le canal (11) est essentiellement rectiligne.

5. Module de chauffage (1) selon l'une quelconque des revendications précédentes, **caractérisé en ce que** le profilé extrudé (2) est fabriqué à partir d'un métal, de préférence l'aluminium.

6. Module de chauffage (1) selon l'une quelconque des revendications précédentes, **caractérisé en ce que** le profilé extrudé (2) est réalisé, au moins sur un côté du logement (4), sous la forme d'un bourrelet de compression (13) essentiellement en forme de U.

7. Module de chauffage (1) selon l'une quelconque des revendications précédentes, **caractérisé en ce que** la surface rayonnante (W) de l'élément chauffant (3) et la surface de chauffe (10) formée par le profilé extrudé (2) ont essentiellement la même taille.

8. Module de chauffage (1) selon l'une quelconque des revendications précédentes, **caractérisé en ce que** le au moins un canal (11), la au moins une surface de chauffe (10) et l'élément chauffant (3) sont disposés les uns sur les autres essentiellement verticalement par rapport à la surface de chauffe (10).

9. Module de chauffage (1) selon l'une quelconque des revendications précédentes, **caractérisé en ce que** la conduite (12) est essentiellement plus longue que le canal (11).

10. Module de chauffage (1) selon l'une quelconque des revendications précédentes, **caractérisé en ce que** la conduite (12) est fabriquée à partir d'un matériau thermoconducteur, de préférence l'aluminium.

11. Module de chauffage (1) selon l'une quelconque des revendications précédentes, **caractérisé en ce que** la conduite (12) est fabriquée à partir d'un matériau résistant à la corrosion.

12. Module de chauffage (1) selon l'une quelconque des revendications précédentes, **caractérisé en ce que** le canal (11) présente un côté entrée et un côté sortie, et le côté entrée et le côté sortie sont disposés du même côté du module de chauffage (1).

13. Module de chauffage (1) selon l'une quelconque des revendications précédentes, **caractérisé en ce que** l'élément chauffant (3) est disposé entre le au moins un canal (11) et la au moins une surface de chauffe (10).

14. Module de chauffage (1) selon l'une quelconque des revendications précédentes, **caractérisé en ce qu'**un bourrelet de compression (13) essentiellement en forme de U est formé sur le au moins un canal (11).

15. Module de chauffage (1) selon l'une quelconque des revendications précédentes, **caractérisé en ce que** l'élément chauffant (3) comprend deux corps d'électrode (6) qui forment un empilement conjointement avec le au moins un élément CTP (5) intercalé.

16. Module de chauffage (1) selon la revendication 15, **caractérisé en ce que** les corps d'électrode (6) présentent chacun un élément de contact (6') par l'intermédiaire duquel les corps d'électrode (6) peuvent être raccordés à une source de tension.

17. Module de chauffage (1) selon l'une quelconque des revendications précédentes, **caractérisé en ce que** l'élément chauffant (3) comprend au moins un élément isolant (7) qui entoure l'empilement formé par le au moins un élément CTP (5) et les deux corps d'électrode (6) en l'isolant électriquement.

18. Module de chauffage (1) selon l'une quelconque des revendications précédentes, **caractérisé en ce que** l'élément chauffant (3) est isolé électriquement du profilé extrudé (2) grâce à l'intercalage d'un élément isolant (7).

19. Module de chauffage (1) selon la revendication 17 ou 18, **caractérisé en ce que** l'élément isolant (7) est fabriqué à partir d'une feuille de matière plastique thermoconductrice, de préférence une feuille de polyimide.

20. Appareil électrique, en particulier cafetière électrique (15) ou appareil de laboratoire, comprenant un réservoir de liquide (17), une plaque chauffante (18) et une tuyauterie (19), **caractérisé en ce que** l'appareil électrique contient un module de chauffage (1) selon l'une quelconque des revendications 1 à 19, dans lequel la surface de chauffe (10) du module de chauffage (1) est reliée de manière thermoconductrice à la plaque chauffante (18).

21. Appareil électrique selon la revendication 20, **caractérisé en ce que** l'appareil électrique comprend un élément de ressort (20) sous l'action duquel le module de chauffage (1) est pressé contre la plaque chauffante (18).

22. Procédé de fabrication d'un module de chauffage (1) permettant de chauffer des liquides en circulation et de chauffer en même temps une surface de chauffe (10) intégrée, comprenant les étapes de procédé suivantes :
- fournir un profilé extrudé (2) comprenant au moins deux espaces creux (4', 11') séparés l'un de l'autre et une surface de chauffe (10),
- introduire un élément chauffant (3) comprenant un élément CTP dans l'un des espaces creux (4') du profilé extrudé (2),
- maintenir par compression l'élément chauffant (3) dans l'espace creux (4') par déformation plastique du profilé extrudé (2),
- introduire au moins une conduite (12) pouvant être traversée par un fluide dans au moins un autre des espaces creux (11'),
- former un canal (11) par déformation plastique de la section de l'autre espace creux (11') autour de la conduite (12).

23. Procédé selon la revendication 22, **caractérisé par** l'étape de procédé suivante :
- plier la conduite (12) selon une forme essentiellement en U avant de l'introduire dans deux autres espaces creux.

24. Procédé selon la revendication 23, **caractérisé par** l'étape de procédé suivante :
- introduire les deux branches de la conduite (12) pliée en forme de U dans d'autres espaces creux du profilé extrudé (2) séparés les uns des autres avant de former les canaux (11).

25. Procédé selon les revendications 22 à 24, **caractérisé par** l'étape de procédé suivante :
- monter au préalable l'élément chauffant (3) en formant un empilement comprenant au moins un élément CTP (5), deux corps d'électrode (6) et au moins un élément isolant (7) avant de l'introduire dans le profilé extrudé (2).
